# EUROPÄISCHE PATENTSCHRIFT

(11) **EP 2 498 113 B1**
(45) Veröffentlichungstag und Bekanntmachung des Hinweises auf die Patenterteilung: **06.03.2013**
(21) Anmeldenummer: 11157740.9
(22) Anmeldetag: 10.03.2011
(51) Int. Cl.: G02B 7/08, G06K 7/10

(54) **Fokusverstellvorrichtung für einen Codeleser**
Focus adjustment device for a code reader
Dispositif de réglage d'objectif pour un lecteur de code

(43) Veröffentlichungstag der Anmeldung: 12.09.2012
(73) Patentinhaber: Sick AG, 79183 Waldkirch (DE)
(72) Erfinder: Anselment, Christoph, 79183 Waldkirch (DE); Gehring, Roland, 79215 Elzach (DE); Nopper, Richard, 79261 Gutach (DE); Nübling, Ulrich, 79211 Denzlingen (DE)
(74) Vertreter: Hehl, Ulrich

(56) Entgegenhaltungen:
- EP-A1- 1 258 765
- DE-A1- 3 823 714
- US-A- 4 437 552
- US-A1- 2004 252 989

## Beschreibung

Die Erfindung betrifft eine Fokusverstellvorrichtung für einen Codeleser zur Positionsverstellung eines Objektivs mit mindestens einer Linse sowie ein Verfahren zur Fokusverstellung nach dem Oberbegriff von Anspruch 1 beziehungsweise 15.

Für das Lesen optischer Codes, wie Barcodes oder Matrixcodes, werden zunehmend kamerabasierte Codeleser eingesetzt. Dabei wird ein Bild des Codes aufgenommen und anschließend die Codeinformation mit digitaler Bildverarbeitung ausgelesen. In industriellen Anwendungen ist der Codeleser dabei häufig stationär an einem Förderband montiert, auf dem codetragende Objekte an dem Codeleser vorbei gefördert werden. Bekannt sind andererseits aber auch Handgeräte, die über die zu lesenden Codes geführt werden.

Viele Codeleser verfügen über eine Fokusverstellung, um Bilder über einen geforderten Arbeitsbereich hinweg scharf aufzunehmen. Meistens wird das mit einem Autofokus verbunden, bei dem der Abstand zu dem aufzunehmenden Objekt bestimmt und die Fokuslage entsprechend eingestellt wird.

Bekannte Fokusverstellungen verschwenken einen Hebel, an dem die Optik befestigt ist, um damit rasch einen verhältnismäßig großen Abstandsunterschied einzustellen. Das lässt sich vor allem für kleine Linsen mit wenig Gewicht und geringer Apertur nutzen. Dabei werden eine Verkippung der Linse und die damit verbundenen Abbildungsfehler in Kauf genommen.

Eine andere Familie bekannter Fokusverstellungen setzt einen motorisch bewegten Exzenter mit einer Gegenfeder auf dem bewegten Hebel ein. Um die Gegenfeder zu kompensieren, ist dabei ein hohes Drehmoment erforderlich.

Die EP 1 513 094 B1 beschreibt einen Codeleser, bei dem der Lichtempfänger auf einem Schwenkarm angeordnet ist, durch dessen Bewegung sich der Abstand zu einer lagefesten Empfangsoptik verändert, um die Fokuslage einzustellen. Dabei verändert sich die optische Achse des Lichtempfängers gegenüber der Empfangsoptik, so dass jede Fokusverstellung zu unterschiedlichen Abbildungsfehlern führt.

Aus der DE 198 45 946 C1 ist eine optoelektronische Vorrichtung zum erkennen von mit definierten Kontrastmustern versehenen Marken bekannt, deren Sendelichtstrahlen durch Verstellen der Position einer Sendeoptik fokussiert werden. Dazu wird die Sendeoptik an einem federgelagerten Balken montiert und dieser Balken mittels eines rotierenden Exzenters bewegt. Periodisch ändert sich damit während der Drehbewegung der Abstand zwischen Sender und Sendeoptik und variiert so die Fokuseinstellung. Der Exzenter und damit die angetriebene Welle wird dabei aber mit der Gegenkraft der Federlagerung belastet. Außerdem verkippt mit der Fokusverstellung auch die Sendeoptik, so dass Abbildungsfehler entstehen.

Die EP 1 258 765 A1 offenbart einen Mechanismus zum Bewegen einer Linse längs deren optischer Achse. Dazu wirkt eine Kurvenscheibe direkt auf eine Linsenhatterung ein. Die Drehung der Kurvenscheibe muss dabei gegen eine auf die Linsenhalterung einwirkende Federkraft arbeiten und belastet somit den Antrieb mit einem Drehmoment.

Bei dem in US 2004/0 252 989 A1 beschriebenen Linsenantriebsmechanismus laufen zwei Zapfen einer Linseneinheit in Nuten einer Drehscheibe, so dass bei Drehung entsprechend der Formgebung der Nuten die Linse vor- und zurückgetrieben wird. Die Kraftübertragung von den Nuten auf die Zapfen ist dabei aber nicht spielfrei.

In der DE 38 23 714 A1 wird eine Vorrichtung zum stufenlosen Verstellen der Brennweite eines Varioobjektivs angegeben. Dabei stehen zwei als unrund bezeichnete Zahnräder miteinander im Eingriff, so dass bei Drehbewegung des einen dieser Zahnräder eine lineare Kraft auf eine mit dem anderen Zahnrad in Eingriff stehende Zahnstange des Trägerrahmens der Linse wirkt. Diese Vorrichtung ist schon wegen der Zahneingriffe nicht verschleißfrei.

Daher ist Aufgabe der Erfindung, eine Fokusverstellung anzugeben, die ein Objektiv schnell und ohne Erzeugung von Abbildungsfehlern in eine geforderte Fokuslage bewegt.

Diese Aufgabe wird durch eine Fokusverstellvorrichtung für einen Codeleser zur Positionsverstellung eines Objektivs mit mindestens einer Linse sowie ein Verfahren zur Fokusverstellung gemäß Anspruch 1 beziehungsweise 14 gelöst. Dabei geht die Erfindung von dem Grundgedanken aus, das Objektiv mit Hilfe einer Kurvenscheibe zu bewegen, die beispielsweise von einem Schrittmotor angetrieben wird. Um ein Verkippen der optischen Achse des Objektivs zu verhindern, wird das Objektiv in einer Parallelführung gelagert. Ein Andruckelement sorgt für eine enge Kopplung der Parallelführung an die Kurvenscheibe, dass also der bewegte Hebel stets spielfrei der Kurvenscheibe folgt. Zugleich wird mit einem Gegenlager zwischen Andruckelement und Antrieb die Kraft des Andruckelements abgeleitet, um den Antrieb davon zu entlasten. Dabei können sich zwischen Andruckelement und Antrieb außer dem Gegenlager auch weitere Elemente befinden, etwa die Kurvenscheibe selbst.

Die Erfindung hat den Vorteil, dass die Fokuslage auch bei Objektiven mit höherem Gewicht schnell, zuverlässig und robust verstellt werden kann. Die Fokusverstellvorrichtung ist für eine sehr hohe Zahl von Verstellzyklen ausgelegt und sehr wartungsarm. Wegen der planparallelen Verschiebung der Objektivebene bleibt die optische Achse des Objektivs bei Fokuslagenänderungen erhalten, und somit werden Abbildungsfehler durch Verkippung vermieden. Die Kopplung zwischen Antrieb und Objektivbewegung ist spielfrei, spricht damit sehr schnell und besonders genau an. Dennoch erzeugt die Kraft des Andruckelements kein Drehmoment auf den Antrieb. Dadurch ist es möglich, das gesamte Drehmoment des Antriebs zur Beschleunigung und damit zur Fokuslageneinstellung zu verwenden. Auch lässt sich so die einmal eingestellte Lage des Objektivs nach einer Fokusverstellung mit minimalem Energieaufwand ortsfest halten. Dabei zeichnet sich die Fokusverstellvorrichtung insgesamt durch eine trotz ihrer Leistungsfähigkeit geringe Komplexität aus.

Die Kurvenscheibe weist einen in Umfangsrichtung umlaufenden Vorsprung auf. Die Kurvenscheibe bildet einen Zylinder, dessen Querschnittsfläche statt einer Kreisform die für eine Fokusverstellung erforderliche Exzentrizität zeigt. Der Vorsprung lässt sich in einer besonders bevorzugten Ausführungsform so beschreiben, dass dieser Zylinder als Hohlzylinder ohne Deckel ausgebildet ist, wobei dann der Vorsprung die Mantelfläche dieses Zylinders ist. Der Vorsprung verläuft vorzugsweise ganz außen in radialer Richtung, weil man ansonsten eine kleinere Kurvenscheibe verwenden könnte.

Das Andruckelement ist bevorzugt radial von außen und das Gegenlagerelement radial von innen an dem Vorsprung angeordnet. Der Vorsprung läuft also während der Drehbewegung der Kurvenscheibe zwischen dem Andruckelement und dem Gegenlagerelement. Dadurch kann das Gegenlagerelement die Kraft des Andruckelements von dem Antrieb ableiten, so dass aufgrund der mit dem Andruckelement erzeugten Spielfreiheit kein zusätzliches Drehmoment auf den Antrieb wirkt.

Das Andruckelement und das Gegenlagerelement sind bevorzugt einander senkrecht zu der Steigung der Kurvenscheibe gegenüberliegend angeordnet. Folglich steht das Andruckelement in dieser Ausführungsform zwar senkrecht auf dem Umfang der Kurvenscheibe, aber um den Steigungswinkel verkippt gegenüber einer Senkrechten durch den Drehpunkt der Kurvenscheibe. Diese Anordnung führt zu einer besonders effektiven und vollständigen Ableitung des von dem Andruckelement auf den Motor wirkenden Drehmoments.

Das Andruckelement und das Gegenlagerelement weisen bevorzugt ein Kugellager auf. Damit kann die Kurvenscheibe mit geringsten Reibungsverlusten spielfrei gelagert werden und sich zwischen den Kugellagern drehen. Die Drehung der Kurvenscheibe überträgt sich wegen der Spielfreiheit unmittelbar auf die Parallelführung. Insbesondere presst das Andruckelement sein Kugellager gegen den Vorsprung der Kurvenscheibe, während das Gegenlagerelement die Andruckkraft von dem Antrieb ableitet.

Die Kurvenscheibe weist bevorzugt über ihren Umfang eine konstante Steigung auf. Dies gilt noch bevorzugter über den gesamten Umfang, wobei natürlich in der Umgebung eines Nullwinkels zumindest ein kleiner Winkelbereich umgekehrter Steigung vorgesehen sein muss, damit sich der Umfang der Kurvenscheibe wieder schließt. Eine konstante Steigung sorgt für eine lineare Übertragung der Drehbewegung auf die Fokusverstellung. Zudem bleibt in der bevorzugten Anordnung von Andruckelement und Gegenlagerelement senkrecht zu der Steigung der Kurvenscheibe deren Anstellwinkel konstant. Alternativ sind Kurvenscheiben mit mehreren Winkelbereichen unterschiedlicher Steigung denkbar. Die Fokusverstellung nutzt jeweils denjenigen Teilwinkelbereich aus, mit dem sich die geforderten Fokuslagen des Arbeitsbereichs einstellen lassen.

Die Parallelführung ist bevorzugt federgelagert. Damit können Spannungskräfte durch die angetriebene Kurvenscheibe abgeleitet werden.

Die Parallelführung weist bevorzugt eine verschiebbare erste Seitenwand mit der Ankopplungseinheit für die Kurvenscheibe und eine lagefeste gegenüberliegende zweite Seitenwand auf, wobei das Objektiv zwischen der ersten Seitenwand und der zweiten Seitenwand angeordnet ist. Die erste Seitenwand wird folglich durch die Kurvenscheibe bewegt und weist mit der Ankopplungseinheit auch das Andruckelement und das Gegenlagerelement auf. Die lagefeste zweite Seitenwand ist beispielsweise starr mit einem Gehäuse verbunden. Zwischen der ersten Seitenwand und der zweiten Seitenwand wird bei Fokuslagenänderungen das Objektiv parallelverschoben.

Vorteilhafterweise ist ein Objektivhaltearm vorgesehen, der an seinem einen Ende das Objektiv haltert, insbesondere mit Hilfe eines Ringelements um das Objektiv, und der an seinem anderen Ende starr mit der ersten Seitenwand verbunden ist. Der Objektivhaltearm kann fest mit der Seitenwand verbunden oder Teil derselben sein. Bei Drehbewegung der Kurvenscheibe wird die erste Seitenwand mit dem Arm verschoben und nimmt über den Objektivhaltearm das Objektiv mit. Wegen der Parallelführung bleibt bei der Bewegung des Objektivs die Objektivebene erhalten, also nur parallelverschoben. Die auftretenden Verschwenkungen nimmt die Parallelführung auf, insbesondere deren Federlagerung.

Die Parallelführung weist bevorzugt einen vorderen Rahmen und einen hinteren Rahmen mit jeweils einer Öffnung für das Objektiv auf. Die Rahmen verbinden somit die erste und zweite Seitenwand. Trotz diverser Aussparungen und Verformungen zur Materialersparnis oder zum Aufnehmen anderer Bauteile sind die Seitenwände und Rahmen im Wesentlichen durch eine rechteckige Form beschrieben. Somit bildet die Parallelführung aus Rahmen und Seitenwänden zumindest im Groben einen nach oben und unten offenen Quader. Ein Boden oder Deckel dieses Quaders bleibt offen. Je nach Drehstellung der Kurvenscheibe wird der Quader mehr oder weniger zu einem Prisma mit Parallelogrammen als Boden- und Deckfläche verzogen.

Der vordere Rahmen und der hintere Rahmen sind bevorzugt jeweils mit Federelementen, insbesondere Blattfedern, mit der ersten Seitenwand und der zweiten Seitenwand verbunden. Diese Federelemente sorgen für eine Federlagerung der Parallelführung, welche die Verzugsspannungen durch die Drehbewegung der Kurvenscheibe und die Positionsänderung des Objektivs aufnehmen. Noch bevorzugter ist je eine Blattfeder an jeder Ecke der Rahmen beziehungsweise Seitenwände vorgesehen, womit insgesamt acht Blattfedern an den acht Ecken des umschreibenden Quaders vorhanden sind. Damit wird die Last sehr gleichmäßig verteilt, und die Parallelführung ist zugleich besonders stabil.

Eine Welle des Antriebs steht bevorzugt senkrecht zu der optischen Achse des Objektivs. Damit steht auch die Ebene der Kurvenscheibe sowie die Bewegungsrichtung der Parallelführung und des Objektivs in der Parallelführung senkrecht oder zumindest im Wesentlichen senkrecht zu der Welle. Auf diese Weise lässt sich die Ankopplung und Bewegungsübertragung effektiv und genau umsetzen.

In bevorzugter Weiterbildung weist ein kamerabasierter Codeleser eine erfindungsgemäße Fokusverstellvorrichtung und einen Bildsensor auf, in dessen optischer Achse das Objektiv nachgeordnet ist, so dass bei Betätigung des Antriebs durch Bewegung der Kurvenscheibe der Abstand zwischen Objektiv und Bildsensor veränderbar und somit die Fokuslage einstellbar ist. Kamerabasierte Codeleser sind besonders auf scharfe Bilder angewiesen, um die vollständige Codeinformation zu erfassen. Zugleich wird in üblichen Anwendungen eine rasche und häufige Fokusverstellung erforderlich, so dass sich die mit der Erfindung erreichte robuste, schnelle und genaue Fokussierung über eine große Zahl von Verstellzyklen besonders gut eignet. Der Codeleser weist bevorzugt eine Auswertungseinheit auf, die dafür ausgebildet ist, aus Bilddaten des Bildsensors eine Codeinformation eines aufgenommenen Codes auszulesen und auszugeben.

Obwohl die Fokusverstellvorrichtung in erster Linie für einen Lichtempfänger gedacht und konzipiert ist, eignet sie sich ebenso für die Fokussierung eines Sendestrahls. Hier wird das Objektiv in der Regel deutlich weniger aufwändig gestaltet sein und meist lediglich aus einer einfachen Sammellinse bestehen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Ansicht eines geöffneten Gehäuses mit einer erfin-dungsgemäßen Fokusverstellung;
- Fig. 2: eine Ausschnittsvergrößerung der Fokusverstellung gemäß Figur 1 aus einer Perspektive senkrecht zu der vorderen Gehäuselängsseite;
- Fig. 3: eine weitere dreidimensionale Ansicht, bei der die Vorrichtung gemäß Figur 1 um 180° gedreht dargestellt ist;
- Fig. 4: eine Ausschnittsvergrößerung gemäß Figur 3 aus einer Perspektive senk-recht zu der vorderen Gehäuselängsseite;
- Fig. 5: einen Längsschnitt durch die Vorrichtung gemäß Figur 1; und
- Fig. 6: einen Querschnitt durch die Vorrichtung gemäß Figur 1 auf Höhe einer Kurvenscheibe und deren Ankopplung.

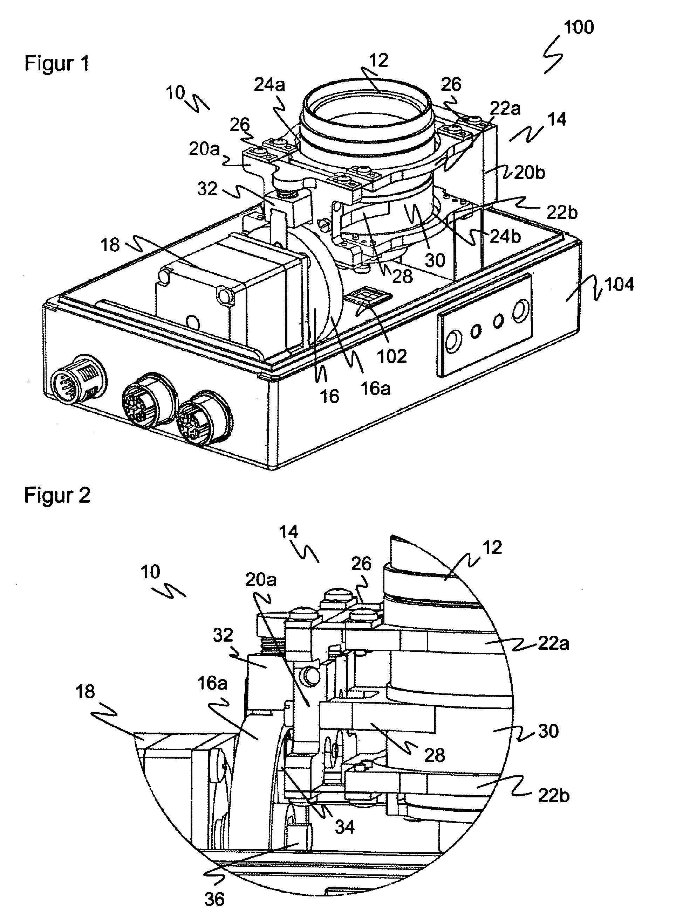

Die Figuren 1 bis 6 zeigen unterschiedliche Ansichten einer Ausführungsform einer erfindungsgemäßen Fokusverstellvorrichtung 10 zur Positionsverstellung eines Objektivs 12. Einzelheiten des Objektivs 12 werden nicht erläutert, weil die Fokusverstellvorrichtung 10 für verschiedenste Objektive 12 mit unterschiedlicher Anzahl von Linsen, Blenden und sonstigen üblichen Elementen eines Objektivs geeignet ist.

Die Fokusverstellvorrichtung 10 wird in einer bevorzugten Ausführungsform in einem kamerabasierten Codeleser 100 zur Einstellung des Abstands zwischen dem Objektiv 12 und einem Lichtempfänger 102 eingesetzt, insbesondere einem Bildsensor mit einer Vielzahl von zu einer Zeile oder einer Matrix angeordneten lichtempfindlichen Empfangspixeln. Weitere Elemente, die in einem kamerabasierten Codeleser 100 vorhanden sein können, sind der Übersichtlichkeit halber nicht dargestellt. Zu diesen Elementen zählen beispielsweise eine Leiterplatte mit einer Auswertungseinheit zur digitalen Aufbereitung der Bilddaten des Lichtempfängers 102 und zum Auslesen einer Codeinformation oder eine Beleuchtungseinheit.

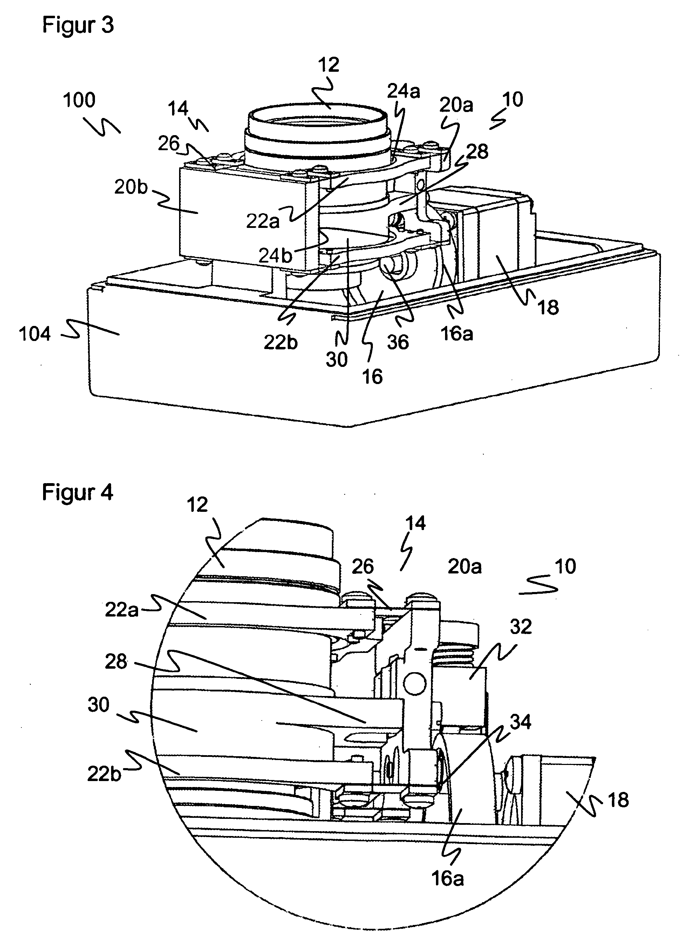

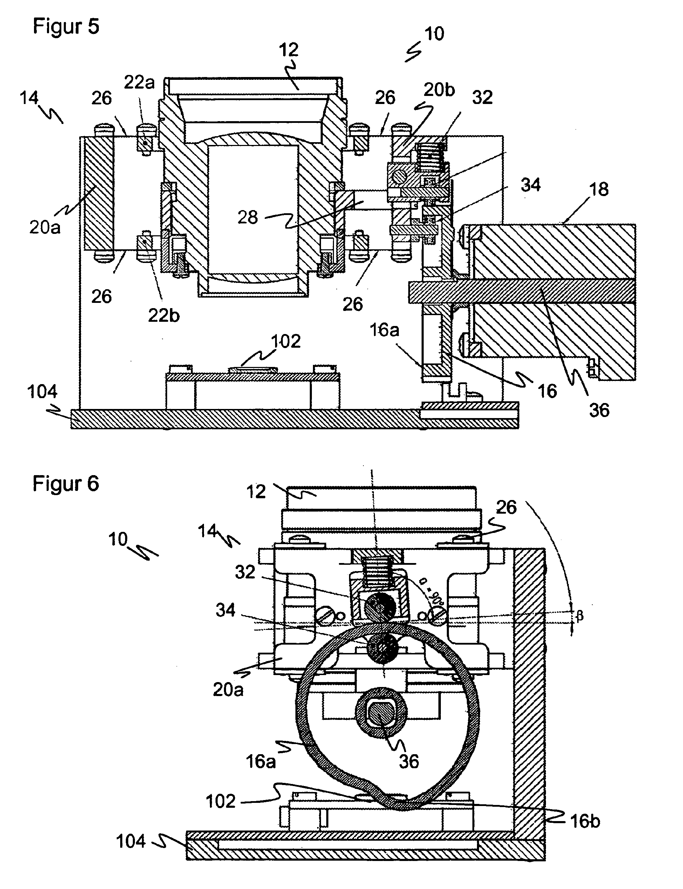

Die nachfolgende Beschreibung bezieht sich zumeist auf alle Figuren gleichermaßen, wobei einzelne Merkmale in bestimmten Ansichten besser erkennbar sind als in anderen Ansichten. In allen Figuren bezeichnen gleiche Bezugszeichen jeweils die gleichen Merkmale. Dabei zeigt Figur 1 eine dreidimensionale Gesamtansicht des Codelesers 100, Figur 2 eine Ausschnittsvergrößerung von dessen Fokusverstellvorrichtung 10, Figur 3 eine weitere dreidimensionale Ansicht des Codelesers 100, die gegenüber Figur 1 um 180° gedreht ist, Figur 4 eine Ausschnittsvergrößerung von dessen Fokusverstellung 10, Figur 5 einen Längsschnitt und Figur 6 einen Querschnitt.

Das Objektiv 12 ist in einer Parallelführung 14 gelagert, die an eine Kurvenscheibe 16 angekoppelt ist. Eine von einem Antrieb 18, beispielsweise einem Schrittmotor erzeugte Drehbewegung der Kurvenscheibe 16 überträgt sich somit in eine Translationsbewegung des Objektivs 12 unter Parallelverschiebung der Objektivebene.

Die Parallelführung 14 weist eine erste Seitenwand 20a und eine zweite Seitenwand 20b sowie einen vorderen Rahmen 22a und einen hinteren Rahmen 22b auf. Dabei sind diese relative Richtungsangaben in den Begriffen aus Sicht des Objektivs 12 längs dessen optischer Achse zu verstehen. Die erste Seitenwand 20a ist beweglich an die Kurvenscheibe 16 angekoppelt, während die zweite Seitenwand 20b beispielsweise durch Verbindung mit einem Gehäuse 104 des Codelesers 100 auch bei Positionsänderungen des Objektivs 12 lagefest bleibt. Der vordere Rahmen 22a und der hintere Rahmen 22b weisen jeweils eine kreisförmige Öffnung 24a-b auf, durch die das Objektiv 24 ohne Berührung des Rahmens 22a-b und mit zumindest einer gewissen seitlichen Toleranz gegenüber Querbewegungen hindurchragt.

An ihren jeweiligen Ecken sind die Seitenwände 20a-b mit den Rahmen 22a-b über insgesamt acht Blattfedern 26 entsprechend den acht paarweise benachbarten Ecken verbunden und bilden so eine Federlagerung für die Parallelführung 14. Geometrisch entsteht aus den Seitenwände 20a-b den Rahmen 22a-b abstrahiert von verschiedenen Ausbuchtungen und Öffnungen eine Art von Quader ohne Deckel und Boden.

Ein mit der ersten Seitenwand 20a starr verbundener oder mit dieser Seitenwand 20a einstückig ausgebildeter Objektivhaltearm 28 ragt ins Innere dieses Quaders und haltert das Objektiv 12, beispielsweise mit Hilfe eines das Objektiv 12 umgreifenden Ringelements 30. Bewegungen der Seitenwand 20a übertragen sich somit direkt auf Bewegungen des Objektivs 12.

Ebenfalls an der ersten Seitenwand 20a ist die Ankopplung der Kurvenscheibe 16 an die Parallelführung 14 angeordnet. Man kann dies auch so ausdrücken, dass die Ankopplung sich an dem Objektivhaltearm 28 befindet, denn wegen der starren Verbindung zwischen Seitenwand 20a und Objektivhaltearm 28 bleibt diese sprachliche Unterscheidung für die mechanische Bewegung ohne Bedeutung.

Die Ankopplung weist ein Andruckelement 32 beispielsweise mit einer Feder und ein Gegenlagerelement 34 auf. Sowohl das Andruckelement 32 als auch das Gegenlagerelement 34 umfassen ein Kugellager. In der so ausgebildeten doppelten Kugellagerführung läuft die Kurvenscheibe 16.

Wie am besten in dem Querschnitt gemäß Figur 6 erkennbar, ist die Kurvenscheibe 16 keine einfache massive Scheibe, sondern weist an ihrem Außenumfang einen umlaufenden Vorsprung 16a beziehungsweise eine Mantelfläche auf. An der Außenseite des Vorsprungs 16a greift das Andruckelement 32, an der Innenseite dem Andruckelement 32 gegenüberliegend das Gegenlagerelement 34 an.

Die Kurvenscheibe 16 weist eine gleichmäßige, konstante Steigung auf. Damit kann eine lineare Übertragung zwischen Drehbewegung der Kurvenscheibe 16 und Verschiebung des Objektivs 12 erreicht werden. Um den Vorsprung 16 in Umfangsrichtung schließen zu können, weist die Kurvenscheibe einen Ausgleichsbereich 16b mit einer größeren, entgegengerichteten Steigung auf, der zugleich als Anschlag für die Drehbewegung dienen kann.

Der vorzugsweise konstante Steigungswinkel β der Kurvenscheibe 16 lässt sich ebenfalls in Figur 6 am besten ablesen. Die Verbindungslinie zwischen dem Andruckelement 32 und dem gegenüberliegenden Gegenlagerelement 34 steht senkrecht zu der Steigungslinie der Kurvenscheibe 16, wie in Figur 6 durch einen Winkel α=90° bezeichnet. Die Verbindungslinie ist deshalb gegenüber dem zugehörigen Radius der Kurvenscheibe, nämlich in Figur 6 einer Senkrechten, um den Steigungswinkel β verkippt. Damit die Kraft des Andruckelements 32 senkrecht auf den Vorsprung 16a und das Gegenlagerelement 34 einwirkt, ist das Andruckelement 32 ebenfalls um diesen Steigungswinkel β verkippt.

Über das Andruckelement 32 wird dessen Kugellager an den Vorsprung 16a der Kurvenscheibe 16 angefedert und gewährleistet so die Spielfreiheit der Ankopplung. Da die Kurvenscheibe 16 mit ihrem Vorsprung 16a in der doppelten Kugellagerführung von Andruckelement 32 und Gegenlagerelement 34 läuft, nimmt das Gegenlagerelement 34 die für die Spielfreiheit von dem Andruckelement 32 erzeugte Kraft auf und leitet sie somit von einer Welle 36 des Antriebs 18 ab. Hierdurch wird eine auf den Antrieb 18 momentenfreie, spielfreie Ankopplung des Antriebs zur Parallelführung 14 erreicht.

Für eine Fokusverstellung wird nun der Antrieb 18 betätigt und dadurch die Kurvenscheibe 16 verdreht. Die Drehbewegung erfolgt um einen Winkel, der einer gewünschten Fokusverstellung entspricht. Dazu kann vorab eine Kennlinie von Objektabständen zu zugehörigen Winkeln beispielsweise durch Simulation, Berechnung oder einen Einlernvorgang abgespeichert werden.

Wenn sich die Welle 36 verdreht und die Kurvenscheibe 16 dabei in gleichem Maße mitnimmt, wird je nach Drehrichtung durch die Steigung an dem Vorsprung 16a das Andruckelement 32 nach außen gedrängt oder das Gegenlagerelement 34, unterstützt von der Andruckkraft des Andruckelements 32, nach innen gezogen. Da der Objektivhalterarm 28 starr mit der ersten Seitenwand 20a verbunden ist, an der die Ankopplung mit dem Andruckelement 32 und dem Gegenlagerelement 34 angebracht ist, bewegt sich das von dem Objektivhaltearm 28 gehalterte Objektiv 12 abhängig von der Drehrichtung von der Welle 36 weg oder zu der Welle 36 hin. Die Bewegungsrichtung des Objektivs 12 ist somit senkrecht zu der Welle 36 und damit der Drehachse der Kurvenscheibe 16.

Die Parallelführung 14 sorgt dafür, dass das Objektiv 12 nicht verkippt, sondern dessen Objektivebene parallelverschoben wird. Durch die Drehung der Kurvenscheibe 16 wird die erste Seitenwand 20a mit dem Objektivhaltearm 28 nach vorne oder hinten bewegt. Dabei wird der Rahmen 22a-b gegenüber der lagefesten zweiten Seitenwand 20b, aber auch gegenüber der ersten Seitenwand 20a verschwenkt. Die Verspannungskräfte werden dabei von den Blattfedern 28 aufgenommen.

Stellt man sich den Hüllkörper, den die Seitenwände 20a-b und der Rahmen 22a-b bilden, in einer Ruhestellung ohne Krafteinwirkung auf die Blattfedern 28 als Quader vor, so bewirkt die Verschiebung der ersten Seitenwand 20a eine Scherung des offenen Bodens beziehungsweise Deckels dieses Quaders von einem Rechteck zu einem nicht rechtwinkligen Parallelogramm. Entsprechend wird der Hüllkörper zu einem Prisma mit dem Parallelogramm als Grundfläche. Dabei wird die optische Achse des Objektivs 12 nicht verkippt. Die Objektivebene wird in erster Näherung nur nach vorne beziehungsweise hinten verschoben. Bei genauer Betrachtung gibt es auch einen geringfügigen seitlichen Parallelversatz. Ein Parallelversatz ohne Verkippung spielt aber für die Schärfe der von dem Lichtempfänger 102 aufgenommenen Bilder keine Rolle. Der Parallelversatz erzeugt keine zusätzlichen Abbildungsfehler, sondern allenfalls einen geringfügigen Bildversatz, der bei einmaliger Aufnahme eines Codes belanglos ist und bei Zusammensetzen größerer Bilder aus mehreren, unter zwischenzeitlicher Fokusverstellung aufgenommener Bilder durch digitale Nachbearbeitung ausgeglichen werden kann.

## Patentansprüche

1. Fokusverstellvorrichtung (10) für einen Codeleser (100), der ein Objektiv (12) mit mindestens einer Linse und einen Antrieb (18) mit einer Kurvenscheibe (16) zur Positionsverstellung des Objektivs (12) aufweist,
**dadurch gekennzeichnet,**
**dass** das Objektiv (12) in einer Parallelführung (14) gelagert ist, dass die Parallelführung (14) eine Ankopplungseinheit (32, 34) für die Ankopplung der Kurvenscheibe (16) aufweist, so dass eine Drehbewegung der Kurvenscheibe (16) die Position des Objektivs (12) in der Parallelführung (14) unter Parallelverschiebung der Objektivebene verstellt, dass die Kurvenscheibe (16) einen in Umfangsrichtung umlaufenden Vorsprung (16a) aufweist und dass die Ankopplungseinheit (32, 34) ein Andruckelement (32) zur spielfreien Ankopplung der Parallelführung (14) an die Kurvenscheibe (16) sowie ein Gegenlagerelement (34) zwischen dem Andruckelement (32) und dem Antrieb (18) zur Entlastung des Antriebs (18) von dem Andruckelement (34) aufweist, wobei der Vorsprung (16a) während der Drehbewegung der Kurvenscheibe (16) zwischen dem Andruckelement (32) und dem Gegenlagerelement (34) läuft.

2. Fokusverstellvorrichtung (10) nach Anspruch 1,
wobei das Andruckelement (32) radial von außen und das Gegenlagerelement (34) radial von innen an dem Vorsprung (16a) angeordnet ist.

3. Fokusverstellvorrichtung (10) nach Anspruch 1 oder 2,
wobei das Andruckelement (32) und das Gegenlagerelement (34) einander senkrecht zu der Steigung der Kurvenscheibe (16) gegenüberliegend angeordnet sind.

4. Fokusverstellvorrichtung (10) nach einem der vorhergehenden Ansprüche,
wobei das Andruckelement (32) und das Gegenlagerelement (34) ein Kugellager aufweisen.

5. Fokusverstellvorrichtung (10) nach einem der vorhergehenden Ansprüche,
wobei die Kurvenscheibe (16) über ihren Umfang eine konstante Steigung aufweist.

6. Fokusverstellvorrichtung (10) nach einem der vorhergehenden Ansprüche,
wobei die Parallelführung (14) federgelagert ist.

7. Fokusverstellvorrichtung (10) nach einem der vorhergehenden Ansprüche,
wobei die Parallelführung (14) eine verschiebbare erste Seitenwand (20a) mit der Ankopplungseinheit (32,3 4) für die Kurvenscheibe (16) und eine lagefeste gegenüberliegende zweite Seitenwand (20b) aufweist, wobei das Objektiv (12) zwischen der ersten Seitenwand (20a) und der zweiten Seitenwand (20b) angeordnet ist.

8. Fokusverstellvorrichtung (10) nach Anspruch 7,
wobei ein Objektivhaltearm (28) vorgesehen ist, der an seinem einen Ende das Objektiv (12) haltert, insbesondere mit Hilfe eines Ringelements (30) um das Objektiv (12), und der an seinem anderen Ende starr mit der ersten Seitenwand (20a) verbunden ist.

9. Fokusverstellvorrichtung (10) nach einem der vorhergehenden Ansprüche,
wobei die Parallelführung (14) einen vorderen Rahmen (22a) und einen hinteren Rahmen (22b) mit jeweils einer Öffnung (34a-b) für das Objektiv (12) aufweist.

10. Fokusverstellvorrichtung (10) nach Anspruch 8 und 9,
wobei der vordere Rahmen (22a) und der hintere Rahmen (22b) jeweils mit Federelementen (26), insbesondere Blattfedern, mit der ersten Seitenwand (20a) und der zweiten Seitenwand (20b) verbunden sind.

11. Fokusverstellvorrichtung (10) nach einem der vorhergehenden Ansprüche,
wobei eine Welle (36) des Antriebs (18) senkrecht zu der optischen Achse des Objektivs (12) steht.

12. Kamerabasierter Codeleser (100) mit einer Fokusverstellvorrichtung (10) nach einem der vorhergehenden Ansprüche, der einen Bildsensor (102) aufweist, in dessen optischer Achse das Objektiv (12) nachgeordnet ist, so dass bei Betätigung des Antriebs (18) durch Bewegung der Kurvenscheibe (16) der Abstand zwischen Objektiv (12) und Bildsensor (102) veränderbar und somit die Fokuslage einstellbar ist.

13. Codeleser (100) nach Anspruch 12,
der eine Auswertungseinheit aufweist, die dafür ausgebildet ist, aus Bilddaten des Bildsensors (102) eine Codeinformation eines aufgenommenen Codes auszulesen und auszugeben.

14. Verfahren zur Fokusverstellung, insbesondere eines kamerabasierten Codelesers (100), bei dem die Fokuslage durch Einstellung des Abstands zwischen einem Bildsensor (102) und einem Objektiv (12) des Codelesers (100) eingestellt wird, indem mittels eines Antriebs (18) und einer Kurvenscheibe (16) die Position des Objektivs (12) verstellt wird,
**dadurch gekennzeichnet,**
**dass** das Objektiv (12) unter Parallelverschiebung der Objektivebene bewegt wird, wobei die Bewegung von einer Drehbewegung der Kurvenscheibe (16) spielfrei auf eine Parallelführung (14) des Objektivs (12) übertragen wird, wobei eine Kraft, welche für die spielfreie Ankopplung zwischen Kurvenscheibe (16) und Parallelführung (14) sorgt, von einem Gegenlagerelement (34) aufgenommen wird, so dass die Kraft kein Drehmoment auf den Antrieb (18) erzeugt, indem ein in Umfangsrichtung umlaufender Vorsprung (16a) der Kurvenscheibe (16) während der Drehbewegung der Kurvenscheibe (16) zwischen dem Andruckelement (32) und dem Gegenlagerelement (34) läuft.

## Claims

1. A focus adjustment apparatus (10) for a code reader (100) which has an objective (12) having at least one lens and a drive (18) with a cam plate (16) for the positional adjustment of the objective (12),
**characterized in that**
the objective (12) is supported in a parallel guide (14), **in that** the parallel guide (14) has a coupling unit (32, 34) for the coupling to the cam plate (16) so that a rotational movement of the cam plate (16) adjusts the position of the objective (12) in the parallel guide (14) with a parallel shift of the objective plane, **in that** the cam plate (16) has a projection (16a) extending around it in the peripheral direction and **in that** the coupling unit (32, 34) has a press-on element (32) for the play-free coupling of the parallel guide (14) to the cam plate (16) as well as a counter-bearing element (34) between the press-on element (32) and the drive (18) for relieving the drive (18) from the press-on element (34), wherein the projection (16a) runs between the press-on element (32) and the counter-bearing element (34) during the rotational movement of the cam plate (16).

2. A focus adjustment apparatus (10) in accordance with claim 1,
wherein the press-on element (32) is arranged radially from the outside at the projection and the counter-bearing element (34) is arranged radially from the inside at the projection (16a).

3. A focus adjustment apparatus (10) in accordance with claim1 or 2,
wherein the press-on element (32) and the counter-bearing element (34) are arranged disposed opposite one another perpendicular to the slope of the cam plate (16).

4. A focus adjustment apparatus (10) in accordance with any of the preceding claims,
wherein the press-on element (32) and the counter-bearing element (34) have a ball bearing.

5. A focus adjustment apparatus (10) in accordance with any of the preceding claims,
wherein the cam plate (16) has a constant slope over its periphery.

6. A focus adjustment apparatus (10) in accordance with any of the preceding claims,
wherein the parallel guide (14) is resiliently supported.

7. A focus adjustment apparatus (10) in accordance with any of the preceding claims,
wherein the parallel guide (14) has a displaceable first side wall (20a) having the coupling unit (32, 34) for the cam plate (16) and an oppositely disposed second side wall (20b) of fixed-position, with the objective (12) being arranged between the first side wall (20a) and the second side wall (20b).

8. A focus adjustment apparatus (10) in accordance with claim 7,
wherein an objective holder arm (28) is provided which holds the objective (12) at its one end, in particular with the aid of a ring element (30) around the objective (12), and which is rigidly connected to the first side wall (20a) at its other end.

9. A focus adjustment apparatus (10) in accordance with any of the preceding claims,
wherein the parallel guide (14) has a front frame (22a) and a rear frame (22b) each having an opening (34a-b) for the objective (12).

10. A focus adjustment apparatus (10) in accordance with claim 8 or 9,
wherein the front frame (22a) and the rear frame (22b) are each connected by spring elements (26), in particular leaf springs, to the first side wall (20a) and to the second side wall (20b).

11. A focus adjustment apparatus (10) in accordance with any of the preceding claims,
wherein a shaft (36) of the drive (18) stands perpendicular to the optical axis of the objective (12).

12. A camera-based code reader (100) having a focus adjustment apparatus (10) in accordance with any of the preceding claims, the code reader (100) providing an image sensor (102) in whose optical axis the objective (12) is arranged so that, on the actuation of the drive (18) by movement of the cam plate (16), the spacing between the objective (12) and the image sensor (102) is variable and the focal position can thus be adjusted.

13. A code reader (100) in accordance with claim 12, having an evaluation unit which is designed to read out and output code information of an imaged code from image data of the image sensor (102).

14. A method for focus adjustment, in particular of a camera-based code reader (100), wherein the focal position is set by setting the spacing between an image sensor (102) and an objective (12) of the code reader (100) by adjusting the position of the objective (12) by means of a drive (18) and a cam plate (16),
**characterized in that**
the objective (12) is moved with a parallel shift of the objective plane, wherein the movement is transferred without play from a rotational movement of the cam plate (16) onto a parallel guide (14) of the objective (12), wherein a force providing the play-free coupling between cam plate (16) and parallel guide (14) is taken up by a counter-bearing element (34), so that the force does not produce any torque on the drive (18), by means of a projection (16a) of the cam plate (16) extending around the cam plate (16) in the peripheral direction running between the press-on element (32) and the counter-bearing element (34) during the rotational movement of the cam plate (16).

## Revendications

1. Dispositif de réglage de focalisation (10) pour un lecteur de code (100) qui comprend un objectif (12) avec au moins une lentille et un entraînement (18) avec un disque à came (16) pour le réglage de position de l'objectif (12),
**caractérisé en ce que**
l'objectif (12) est monté dans un guidage parallèle (14), **en ce que** le guidage parallèle (14) comprend une unité d'accouplement (32, 34) pour l'accouplement du disque à came (16) de telle façon qu'un mouvement de rotation du disque à came (16) règle la position de l'objectif (12) dans le guidage parallèle (14) avec déplacement parallèle du plan de l'objectif, **en ce que** le disque à came (16) comprend une saillie (16a) périphérique en direction périphérique, et **en ce que** l'unité d'accouplement (32, 34) comprend un élément presseur (32) pour l'accouplement sans jeu du guidage parallèle (14) contre le disque à came (16), ainsi qu'un élément de montage antagoniste (34) entre l'élément presseur (34) et l'entraînement (18) pour décharger l'entraînement (18) vis-à-vis de l'élément presseur (34), et dans lequel pendant le mouvement de rotation du disque à cames (16) la saillie (16a) circule entre l'élément presseur (32) et l'élément de montage antagoniste (34).

2. Dispositif de réglage de focalisation (10) selon la revendication 1,
dans lequel l'élément presseur (32) est agencé radialement depuis l'extérieur contre la saillie (16a), et l'élément de montage antagoniste (34) est agencé radialement depuis l'intérieur contre la saillie (16a).

3. Dispositif de réglage de focalisation (10) selon la revendication 1 ou 2,
dans lequel l'élément presseur (32) est l'élément de montage antagoniste (34) sont agencés à l'opposé l'un de l'autre perpendiculairement à la pente du disque à cames (16).

4. Dispositif de réglage de focalisation (10) selon l'une des revendications précédentes,
dans lequel l'élément presseur (32) et l'élément de montage antagoniste (34) comprennent un palier à billes.

5. Dispositif de réglage de focalisation (10) selon l'une des revendications précédentes,
dans lequel le disque à cames (16) présente une pente constante sur sa périphérie.

6. Dispositif de réglage de focalisation (10) selon l'une des revendications précédentes,
dans lequel le guidage parallèle (14) est monté avec ressort.

7. Dispositif de réglage de focalisation (10) selon l'une des revendications précédentes,
dans lequel le guidage parallèle (14) comprend une première paroi latérale mobile (20a) avec l'unité d'accouplement (32, 34) pour le disque à cames (16) et une seconde paroi latérale (20b) opposée en position fixe, dans lequel l'objectif (12) est agencé entre la première paroi latérale (20a) et la seconde paroi latérale (20b).

8. Dispositif de réglage de focalisation (10) selon la revendication 7,
dans lequel il est prévu un bras porte-objectif (28) qui tient l'objectif (12) à l'une de ses extrémités, en particulier avec l'aide d'un élément annulaire (30) autour de l'objectif (12), et qui est relié rigidement avec la première paroi latérale (20a) à son autre extrémité.

9. Dispositif de réglage de focalisation (10) selon l'une des revendications précédentes,
dans lequel le guidage parallèle (14) comprend un cadre antérieur (22a) et un cadre postérieur (22b) ayant chacun une ouverture (34a-b) pour l'objectif (12).

10. Dispositif de réglage de focalisation (10) selon la revendication 8 et 9,
dans lequel le cadre antérieur (22a) et le cadre postérieur (22b) sont respectivement reliés avec des éléments à ressort (26), en particulier des ressorts à lame, avec la première paroi latérale (20a) et avec la seconde paroi latérale (20b).

11. Dispositif de réglage de focalisation (10) selon l'une des revendications précédentes,
dans lequel un arbre (36) de l'entraînement (18) est dressé perpendiculairement à l'axe optique de l'objectif (12).

12. Lecteur de code (100) basé sur une caméra, comprenant un dispositif de réglage de focalisation (10) selon l'une des revendications précédentes, qui comprend un capteur d'image (102), tel que l'objectif (12) est agencé à la suite dans son axe optique, de sorte que lors d'un actionnement de l'entraînement (18) et par déplacement du disque à came (16), la distance entre l'objectif (12) et le capteur d'image (102) est variable et ainsi la position de focalisation est réglable.

13. Lecteur de code (100) selon la revendication 12,
qui comprend une unité d'évaluation réalisée pour lire, à partir de données image du capteur d'image (102), une information de code d'un code enregistré, et pour fournir cette information.

14. Procédé de réglage de focalisation, en particulier d'un lecteur de code (100) basé sur une caméra, dans lequel on règle la position de focalisation par réglage de la distance entre un capteur d'image (102) et un objectif (12) du lecteur de code (100), en déplaçant la position de l'objectif (12) au moyen d'un entraînement (18) et d'un disque à came (16),
**caractérisé en ce que**
l'objectif (12) est déplacé par déplacement parallèle du plan objectif, le mouvement depuis un mouvement de rotation du disque à came (16) étant transféré sans jeu à un guidage parallèle (14) de l'objectif (12), dans lequel une force qui assure un accouplement sans jeu entre le disque à came (16) et le guidage parallèle (14) est encaissé par un élément de montage antagoniste (34), de sorte que la force n'engendre aucun couple de rotation sur l'entraînement (18), et dans lequel une saillie (16a) du disque à came (16), périphérique en direction périphérique, circule pendant le mouvement de rotation du disque à came (16) entre l'élément presseur (32) est l'élément de montage antagoniste (34).
